# EUROPÄISCHE PATENTSCHRIFT

(11) **EP 0 738 056 B1**
(45) Veröffentlichungstag und Bekanntmachung des Hinweises auf die Patenterteilung: **06.03.2002**
(21) Anmeldenummer: 96105825.2
(22) Anmeldetag: 13.04.1996
(51) Int. Cl.: H04L 1/08, H04L 1/02, H04B 7/02

(54) **Verfahren und Vorrichtung zur Informationsübertragung in periodisch gestörten drahtlosen Übertragungskanälen**
Method and apparatus for wireless data transmission on periodically disturbed transmission channels
Méthode et dispositif de transmission de données sans fil sur canaux de transmission ayant des perturbations périodiques

(30) Priorität: 15.04.1995 DE 19514195
(43) Veröffentlichungstag der Anmeldung: 16.10.1996
(73) Patentinhaber: GRUNDIG Aktiengesellschaft, 90471 Nürnberg (DE)
(72) Erfinder: Müller, Werner, c/o Grundig E.M.V., 90762 Fürth (DE)

(56) Entgegenhaltungen:
- FR-A- 2 375 604
- US-A- 3 526 837
- US-A- 3 842 352

## Beschreibung

Die Erfindung betrifft ein Verfahren und eine Vorrichtung zur Informationsübertragung in periodisch gestörten, nicht leitungsgebundenen Übertragungskanälen.

Ein derartiges verfahren ist aus FR 2 375 604 A bekannt.

Bei der Datenübertragung über kurze Strecken, beispielsweise bei der Übertragung von Audiosignalen von einem Verstärker zu den Lautsprecherboxen oder bei der Datenübertragung in Alarmanlagen von den Meldeeinheiten zur Alarmzentrale hat es sich als vorteilhaft erwiesen, drahtlose Datenübertragungsverfahren zu verwenden. Die drahtlose Datenübertragung weist den Vorteil auf, daß die sonst notwendige Verkabelung entfällt.

Bei der drahtlosen Datenübertragung innerhalb von Gebäuden weist insbesondere die Funkübertragung Vorteile gegenüber der Infrarotübertragung auf, da bei der Funkübertragung die Beschränkung auf Sichtweite entfällt, d.h. die Daten können ohne zusätzlichen Aufwand auch in andere Räume übertragen werden.

Bei der Funkübertragung im ISM-Band von 2,4 bis 2,5 GHz treten jedoch häufig periodische Störungen auf, die insbesondere durch Mikrowellenherde, die in diesem Frequenzbereich arbeiten, verursacht werden. Die Mikrowellenherde arbeiten in der Regel mit Einweggleichrichtung für die Spannungsversorgung des Magnetrons, wodurch periodische Störungen mit der Frequenz des Stromnetzes verursacht werden.

Es ist deshalb Aufgabe der Erfindung, ein Verfahren und eine Vorrichtung zur Durchführung des Verfahrens anzugeben, bei dem diese Störungen beseitigt werden.

Diese Aufgabe wird gemäß der Erfindung ausgehend von den Merkmalen des Oberbegriffes des Anspruches 1 bzw. 4 durch die kennzeichnenden Merkmale des Anspruches 1 bzw. 4 gelöst.
Vorteilhafte Ausgestaltungen der Erfindung sind in den abhängigen Ansprüchen angegeben.

Gemäß der Erfindung wird ein Verfahren zur Informationsübertragung in periodisch gestörten, nicht leitungsgebundenen Übertragungskanälen vorgeschlagen, bei dem der Informationsstrom senderseitig in einem Verzögerungsglied, dessen Verzögerungszeit der halben Störperiodendauer entspricht, verzögert wird. Der verzögerte sowie der unverzögerte Informationsstrom werden durch Funkübertragung an einen Empfänger gesendet. Im Empfänger wird der senderseitig unverzögerte Informationsstrom in einem empfängerseitigen Verzögerungsglied, das die gleiche Verzögerungszeit wie das senderseitige Verzögerungsglied aufweist, verzögert und über einen Umschalter wird das verzögerte oder unverzögerte Informationssignal weitergeschaltet, wobei der Umschaltvorgang mit der Frequenz der Störungen ausgeführt wird.

Durch das erfindungsgemäße Verfahren wird das Nutzsignal zweifach, gegeneinander zeitversetzt gesendet. Da der Zeitversatz der halben Störperiodendauer entspricht, kann jedes Nutzsignal empfängerseitig aus den beiden zeitversetzten Nutzsignalströmen wiederhergestellt werden.

Es hat sich als vorteilhaft erwiesen, die zeitversetzten Informationssignale im Multiplexbetrieb zu übertragen. Der Multiplexbetrieb bietet eine einfache Möglichkeit der Übertragung der verzögerten und unverzögerten Nutzsignale.

Eine weitere vorteilhafte Ausgestaltung des erfindungsgemäßen Verfahrens sieht vor, daß die Informationssignale einer senderseitigen digitalen Modulation und einer entsprechenden empfängerseitigen Demodulation unterzogen werden.

Die erfindungsgemäße Vorrichtung zur Informationsübertragung in periodisch gestörten, nicht leitungsgebundenen Übertragungskanälen sieht ein Laufzeitelement vor, das senderseitig angeordnet ist und das Informationssignal um eine vorgegebene Zeitspanne verzögert. Die Vorrichtung enthält weiterhin einen Multiplexer, der senderseitig abwechselnd das verzögerte und das unverzögerte Informationssignal weiterschaltet und eine Steuereinheit zur Ansteuerung des Multiplexers für die zeitrichtige Umschaltung des Multiplexers. Empfängerseitig ist ein Demultiplexer vorgesehen, der von einer zweiten Steuereinheit für die zeitrichtige Umschaltung angesteuert wird. Ein zweites Verzögerungsglied, das empfängerseitig angeordnet ist und die selbe Verzögerungszeit wie das senderseitige aufweist, verzögert das senderseitg nicht verzögerte Nutzsignal. Ein Umschalter, an dem das empfangsseitig verzögerte und das empfangsseitig unverzögerte Informationssignal anliegen, wird von einer Umschaltsteuereinheit, die den Umschalter so ansteuert, daß er mit der Frequenz der periodischen Störung abwechselnd das verzögerte und unverzögerte Informationssignal weiterschaltet, angesteuert.

Gemäß einer vorteilhaften Ausgestaltung der erfindungsgemäßen Vorrichtung sind die Laufzeitelemente als FIFO-Speicher ausgeführt. Diese Ausführungsform der Laufzeitelemente läßt bei der Übertragung von digitalen Daten eine kostengünstige und mit der Taktfreqeuenz des Übertragungssystems steuerbare Zeitverzögerung zu.

Gemäß einer weiteren vorteilhaften Ausgestaltung der erfindungsgemäßen Vorrichtung beinhaltet die Umschaltsteuereinheit eine Fehlerauswerteeinheit und eine Phasenregeleinheit, bei der in Abhängigkeit der Fehlerauswertung die Schaltfrequenz für den Umschalter vorgegeben wird, wobei die Phasenregeleinheit so ausgeführt ist, daß die Phasenlage der Schaltfrequenz auf den Datenstrom und die Phasenlage der Störung synchronisiert wird.

Im folgenden wird die Erfindung an Hand der Figuren 1 bis 3 näher erläutert.

Es zeigen:
Figur 1: ein Blockschaltbild der erfindungsgemäßen Vorrichtung,
Figur 2: ein Zeitdiagramm der Netzfrequenz und der periodischen Störungen, und
Figur 3: ein Zeitdiagramm für den Zustand der Signale an verschieden Punkten des Blockschaltbildes nach Figur 1.

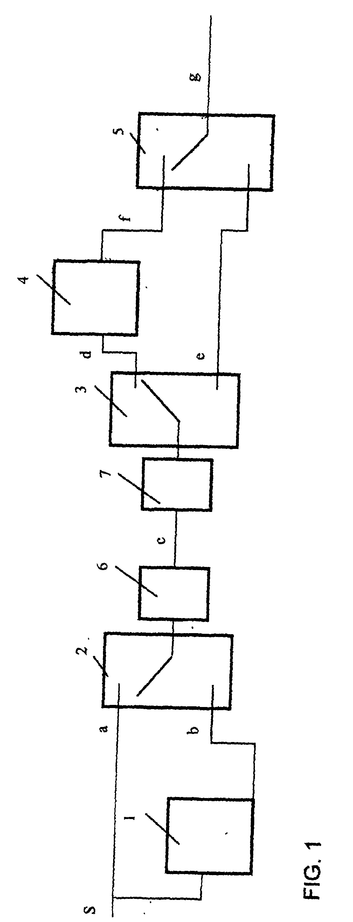

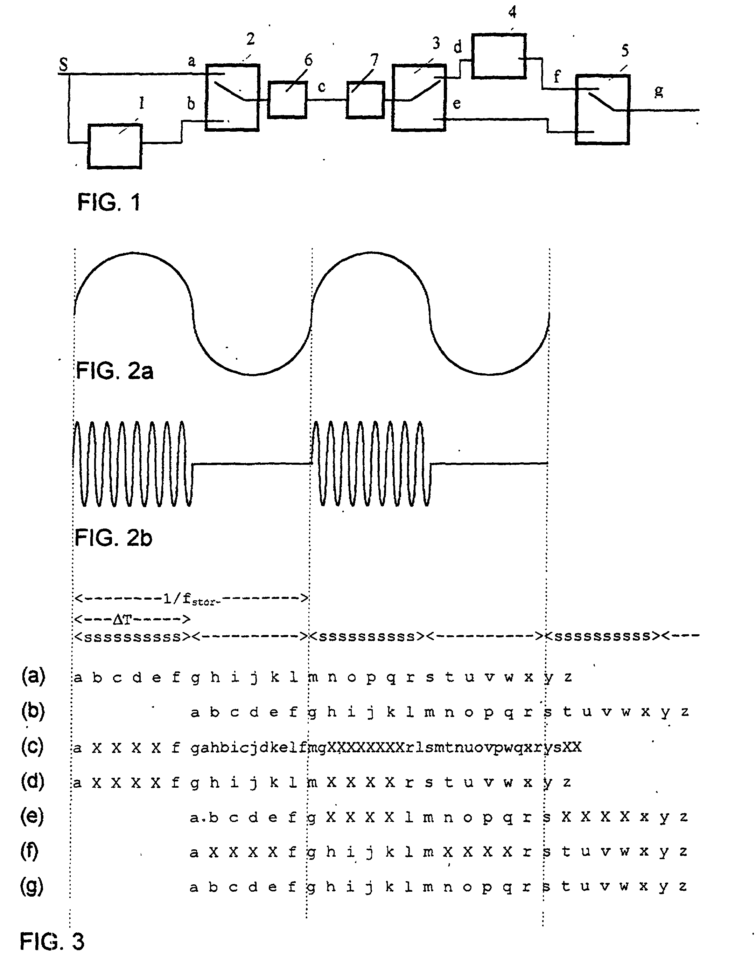

Das Blockschaltbild nach Figur 1 zeigt ein Signal S, das an ein Laufzeitelement 1 zur Verzögerung und einen Multiplexer 2 geführt wird, an dessen zweiten Eingang das verzögerte Signal anliegt. Im Multiplexer 2 wird abwechselnd das unverzögerte Signal a und das verzögerte Signal b an den Ausgang geschaltet.

Das Ausgangssignal des Multiplexers 2 wird an einen Modulator 6 geführt, dessen Ausgangssignal mittels einer nicht dargestellten Funksendeeinheit übertragen wird. Auf der Empfangsseite wird das übertragene Signal mittels einer ebenfalls nicht dargestellten Empfängereinheit empfangen und in einem Demodulator 7 demoduliert.
Das demodulierte Signal wird an einen Demultiplexer 3 geführt, dessen Ausgangssignal d an ein Verzögerungselement 4 geführt wird. Das verzögerte Signal f wird an eine Umschalteinheit 5 geführt. Die Umschalteinheit 5 weist einen zweiten Signaleingang auf, an dem das empfängerseitig unverzögerte Signal e anliegt.
Am Ausgang des Umschalters 5 liegt das Nutzsignal g an. Der Umschalter 5 wird von einer nicht dargestellten Umschaltsteuereinheit in der Weise angesteuert, daß er mit der Frequenz der periodischen Störung abwechselnd das empfängerseitig verzögerte bzw. unverzögerte Signal durchschaltet. Auf diese Weise wird am Ausgang des Umschalters 5 das wiederhergestellte und von den periodischen Störungen befreite Nutzsignal zur Verfügung gestellt.

Die Figur 2a zeigt eine sinusförmige Netzspannung mit der Netzfrequenz 50 Hz. In Figur 2b ist ein mit dieser Netzfrequenz auftretendes Störsignal dargestellt, wie es beispielsweise durch einen Mikrowellenherd verursacht wird. Durch die in Mikrowellenherden üblichen Einweggleichrichtung für die Spannungsversorgung des Magnetrons haben die periodischen Störungen die Dauer der halben Periode der Netzfrequenz.

Figur 3 zeigt die Wirkungsweise des erfindungsgemäßen Verfahrens bzw. der erfindungsgemäßen Vorrichtung zur Durchführung des Verfahrens zur Informationsübertragung. Die Periode der Störsignale ist mit 1/f_{stör} bezeichnet. Die Verzögerungszeit ΔT entspricht der halben Periode des Störsignales.

In der Zeile (a) von Figur 3 ist das Signal a dargestellt, wie es am ersten Eingang des Multiplexers 2 nach Figur 1 anliegt. Die Zeile (b) zeigt das im Laufzeitelement 1 um ΔT verzögerte Signal b, wie es am zweiten Signaleingang des Multiplexers 2 anliegt.
In Zeile (c) ist das übertragene Nutzsignal c dargestellt, das die Störungen X enthält.
Zeile (d) zeigt das am Ausgang des Multiplexers 3 liegende Signal d, das dem unverzögerten Eingangssignal mit den Störungen X entspricht. In Zeile (e) ist das senderseitig verzögerte Signal e mit den im Übertragungsweg entstandenen, periodischen Störungen X dargestellt.
Durch die Verzögerung des Signales d im Laufzeitelement 4 erhält man das in Zeile (f) dargestellte Signal f.
Wie man aus den Zeilen (e) und (f) erkennen kann, sind nunmehr die im Übertragungsweg entstandenen periodischen Störungen zeitlich versetzt und betreffen unterschiedliche Signalinhalte. Durch den Umschalter 5, der periodisch entweder das Signal f oder das Signal e durchschaltet, erhält man das Signal g, das in Zeile (g) der Figur 3 dargestellt ist. Durch die periodische und phasenrichtige Umschaltung ist das Signal g von den Störungen X befreit und um die Zeitdauer ΔT gegenüber dem Signal S (entspricht Signal a in Zeile (a)) verschoben.

Der Umschalter 5 wird in bevorzugter Weise von einer in Figur 1 nicht dargestellten Umschaltsteuereinheit angesteuert, die eine Fehlerauswerteeinheit und eine Phasenregeleinheit enthält. In der Fehlerauswerteeinheit kann der Zeitpunkt der des Vorliegens der periodischen Störungen bestimmt werden. Mit der Phasenregeleinheit wird die Phase der Schaltfrequenz auf den Datenstrom und die Phasenlage der Störung synchronisiert.

## Patentansprüche

1. Verfahren zur Informationsübertragung in periodisch gestörten, nicht leitungsgebundenen Übertragungskanälen
**dadurch gekennzeichnet, daß**
der Informationsstrom senderseitig in einem Verzögerungsglied, dessen Verzögerungszeit der halben Störperiodendauer entspricht, verzögert wird und der verzögerte sowie der unverzögerte Informationsstrom durch Funkübertragung an einen Empfänger gesendet wird, und
im Empfänger der senderseitig unverzögerte Informationsstrom in einem empfängerseitigen Verzögerungsglied, das die gleiche Verzögerungszeit wie das senderseitige Verzögerungsglied aufweist, verzögert wird und über einen Umschalter mit der Frequenz der Störungen das verzögerte bzw. unverzögerte Informationssignal weitergeschaltet wird.

2. Verfahren nach Anspruch 1, **dadurch gekennzeichnet, daß** die verzögerten und unverzögerten Informationssignale im Multiplexbetrieb übertragen werden.

3. Verfahren nach Anspruch 1 oder Anspruch 2,
**dadurch geikennzeichnet, daß**
die verzögerten und unverzögerten Informationssignale vor der Funkübertragung einer digitalen Modulation unterzogen werden.

4. Vorrichtung zur Informationsübertragung in periodisch gestörten, nicht leitungsgebundenen Übertragungskanälen,
**gekennzeichnet durch**
ein Laufzeitelement (1), das senderseitig angeordnet ist und das Informationssignal (S) um eine vorgegebene Zeitspanne verzögert,
einen Multiplexer (2), der senderseitig abwechselnd das verzögerte und das unverzögerte Informationssignal weiterschaltet,
einer Steuereinheit zur Ansteuerung des Multiplexers (2) für die zeitrichtige Umschaltung des Multiplexers,
einen Demultiplexer (3), der empfängerseitig angeordnet ist und von einer zweiten Steuereinheit für die zeitrichtige Umschaltung angesteuert wird
ein zweites Verzögerungsglied (4), das empfängerseitig angeordnet ist und die selbe Verzögerungszeit wie das senderseitige aufweist,
einen Umschalter (5), an dem das empfangseitig verzögerte und unverzögerte Informationssignal anliegt, und
einer Umschaltsteuereinheit, die den Umschalter (5) so ansteuert, daß er mit der Frequenz der periodischen Störung abwechselnd das verzögerte und unverzögerte Informationssignal weiterschaltet.

5. Vorrichtung nach Anspruch 4,
**dadurch gekennzeichnet, daß**
die Laufzeitelemente (1,4) als FIFO-Speicher ausgeführt sind.

6. Vorrichtung nach Anspruch 4 oder 5,
**dadurch gekennzeichnet, daß**
die Umschaltsteuereinheit eine Fehlerauswerteeinheit und eine Phasenregeleinheit beinhaltet, wobei in Abhängigkeit der Fehlerauswertung die Schaltfrequenz für den Umschalter (5) vorgegeben wird und die Phasenregeleinheit so ausgeführt ist, daß die Phasenlage der Schaltfrequenz auf den Datenstrom und die Phasenlage der Störung synchronisiert wird.

## Claims

1. Method for information transmission in non-line-conducted transmission channels subject to periodic interference, **characterized in that** the information stream is delayed at the transmitter end in a delay element whose delay time is equal to half the interference cycle time and the delayed and the undelayed information stream are transmitted by radio transmission to a receiver, and, in the receiver, the information stream not delayed at the transmitter end is delayed in a receiver-end delay element that has the same delay time as the transmitter-end delay element and the delayed or undelayed information signal, respectively, is forwarded via a switch with the frequency of the interference.

2. Method according to Claim 1, **characterized in that** the delayed and undelayed information signals are transmitted in the multiplex mode.

3. Method according to Claim 1 or 2, **characterized in that** the delayed and undelayed information signals are subjected to a digital modulation prior to the radio transmission.

4. Device for information transmission in non-line-conducted transmission channels subject to periodic interference, **characterized by** a lag element (1) that is disposed at the transmitter end and delays the information signal (S) by a set time interval, a multiplexer (2) that alternately forwards the delayed and the undelayed information signal at the transmitter end, a control unit for activating the multiplexer (2) for the correctly timed switching of the multiplexer, a demultiplexer (3) that is disposed at the receiver end and is activated by a second control unit for correctly timed switching, a second delay element (4) that is disposed at the receiver end and has the same delay time as that at the transmitter end, a switch (5) to which the information signal delayed and undelayed at the receiver end is applied and a switch control unit that activates the switch ('5) in such a way that it alternately forwards the delayed and undelayed information signal with the frequency of the periodic interference.

5. Device according to Claim 4, **characterized in that** the lag elements (1, 4) are designed as FIFO memories.

6. Device according to Claim 4 or 5, **characterized in that** the switch control unit comprises an error evaluation unit and a phase control unit, wherein the switching frequency for the switch (5) is set as a function of the error evaluation and the phase control unit is designed in such a way that the phase position of the switching frequency is synchronized with the data stream and the phase position of the interference.

## Revendications

1. Procédé de transmission d'informations dans des canaux de transmission perturbés périodiquement, non assujettis à une ligne, **caractérisé en ce que** le flux d'informations est retardé côté émetteur dans un circuit de retardement, dont la durée de retardement correspond à la moitié de la durée de la période parasite, et le flux d'informations retardé et le flux d'information non retardé sont émis par transmission radio en direction d'un récepteur et dans le récepteur le flux d'informations non retardé côté émetteur est retardé dans un circuit de retardement situé côté récepteur et qui présente le même temps de retardement que le circuit de retardement côté émetteur, et le signal d'information retardé et le signal d'information non retardé sont transmis par l'intermédiaire d'un commutateur à la fréquence des perturbations.

2. Procédé selon la revendication 1, **caractérisé en ce que** les signaux d'information retardés et les signaux d'information non retardés sont transmis selon un fonctionnement multiplex.

3. Procédé selon la revendication 1 ou la revendication 2, **caractérisé en ce que** les signaux d'information retardés et les signaux d'information non retardés sont soumis à une modulation numérique avant la transmission radio.

4. Dispositif pour la transmission d'informations dans des canaux de transmission perturbés périodiquement, non assujettis à une ligne, **caractérisé par**
un élément à temps de propagation (1), qui est disposé côté émetteur et retarde le signal d'information (S) d'un intervalle de temps prédéterminé,
un multiplexeur (2), qui côté émetteur transmet alternativement le signal d'information retardé et le signal d'information non retardé,
une unité de commande pour la commande du multiplexeur (2) pour la commutation correcte dans le temps du multiplexeur, un démultiplexeur (3), qui est disposé côté récepteur et est commandé par une seconde unité de commande pour la commutation en temps correcte,
un second circuit de retardement (4), qui est disposé côté récepteur et produit le même temps de retardement que le circuit de retardement situé côté émetteur,
un commutateur (5), auquel sont appliqués le signal d'information retardé côté réception et le signal non retardé côté réception, et
une unité de commande de commutation, qui commande le commutateur (5) de telle sorte qu'il transmet alternativement le signal d'information retardé et le signal d'information non retardé, à la fréquence de la perturbation périodique.

5. Dispositif selon la revendication 4, **caractérisé en ce que** les éléments à temps de propagation (1, 4) sont agencés sous la forme de mémoires FIFO.

6. Dispositif selon la revendication 4 ou 5, **caractérisé en ce que** l'unité de commutation contient une unité d'évaluation de défaut et une unité de régulation de phase, auquel cas la fréquence de commutation pour le commutateur (5) est prédéterminée en fonction de l'évaluation d'erreur et l'unité de régulation de phase est agencée de telle sorte que la position de phase de la fréquence de commutation est synchronisée sur le flux de données et sur la position de phase de la perturbation.
